# EUROPÄISCHE PATENTANMELDUNG

(11) **EP 0 576 855 A2**
(43) Veröffentlichungstag der Anmeldung: **05.01.1994**
(21) Anmeldenummer: 93108943.7
(22) Anmeldetag: 03.06.1993
(51) Int. Cl.: H04L 12/56, H04Q 11/04

(54) **Verfahren und Schaltungsanordnung zum Übertragen von ATM-Nachrichtenzellen unterschiedlicher Nachrichtenquellen**

(30) Priorität: 30.06.1992 DE 4223877
(71) Anmelder: SIEMENS AKTIENGESELLSCHAFT, D-80333 München (DE)
(72) Erfinder: Heeke, Helmut, Dipl.-Phys., D-8000 München (DE)

(57) **Zusammenfassung**

Über eine Übertragungsleitung (z.B. E1) eines nach einem asynchronen Übertragungsprinzip arbeitenden ATM-Netzes werden Nachrichtensignale in Form von Nachrichtenzellen übertragen, die im Zuge von virtuellen Verbindungen von einer Mehrzahl von Nachrichtenquellen (QU1,..., QUm) mit variabler Datenrate abgegeben werden. Für die jeweilige virtuelle Verbindung einer Nachrichtenquelle wird dabei lediglich eine endliche Anzahl von unterschiedlichen Datenraten festgelegt, welche jeweils durch bestimmte statistische Verkehrsparameter gekennzeichnet sind. Durch das ATM-Netz wird im Zuge des Aufbaues der jeweiligen virtuellen Verbindung nach Maßgabe dieser statistischen Verkehrsparameter eine entsprechende Übertragungskapazität auf der Übertragungsleitung (E1) reserviert.

## Beschreibung

Die Erfindung betrifft ein Verfahren und eine Schaltungsanordnung gemäß Oberbegriff des Patentanspruches 1 bzw. des Patentanspruches 10.

In Breitband-ATM-Netzen ist zum Teil vorgesehen, Nachrichtenquellen an eine gemeinsame Übertragungsleitung anzuschließen, welche Nachrichtensignale mit zeitlich variabler Datenrate abgeben, die nach einem statistischen Multiplexprinzip zusammengefaßt werden. Dazu muß im Zuge des jeweiligen Aufbaues einer virtuellen Verbindung die voraussichtliche Übertragungskapazität bestimmt und reserviert werden. Hierzu ist bereits vorgeschlagen worden, als Verkehrsparameter die Spitzenbitrate und/oder den Mittelwert bzw. die Varianz des von der jeweiligen Nachrichtenquelle abgegebenen Nachrichtensignalstromes zu benutzen, deren Einhaltung in dem ATM-Netz überwacht wird. Diese Verkehrsparameter bringen jedoch entweder lediglich einen geringen Multiplexgewinn oder erfordern Überwachungszeiten, deren Längen zum Teil unerwünscht sind.

Es ist nun Aufgabe der vorliegenden Erfindung, einen Weg zu zeigen, wie bei einem Verfahren und bei einer Schaltungsanordnung der eingangs genannten Art ein statistisches Multiplexen von Nachrichtensignalströmen mit einem verbesserten Multiplexgewinn erreicht werden kann.

Gelöst wird diese Aufgabe bei einem Verfahren gemäß Oberbegriff des Patentanspruches 1 durch die in diesem Patentanspruch angegebenen Verfahrensmerkmale. Die Erfindung bringt dabei den Vorteil mit sich, daß durch die Festlegung lediglich einer endlichen Anzahl von unterschiedlichen Datenraten für die jeweilige virtuelle Verbindung einer Nachrichtenquelle und durch die Reservierung einer Übertragungskapazität auf der Übertragungsleitung nach Maßgabe der individuellen statistischen Verkehrsparameter mit einem relativ geringen Steuerungsaufwand der Multiplexgewinn verbessert werden kann. Darüber hinaus ist das Verkehrsverhalten der einzelnen Nachrichtenquellen anhand der individuellen statistischen Verkehrsparameter in einfacher Weise überwachbar.

Vorteilhafte Ausgestaltungen des Verfahrens gemäß der vorliegenden Erfindung ergeben sich aus den Patentansprüchen 2 bis 9. Die Patentansprüche 2, 3 und 7 betreffen dabei in besonders einfacher Weise festlegbare statistische Verkehrsparameter und deren individuelle Überwachung, die in einer deutlich verkürzten Überwachungszeit durchführbar ist. Die Ausgestaltung nach den Patentansprüchen 4 bis 6 beziehen sich auf Alternativen bezüglich der im Zuge des Verbindungsaufbaus zwischen der jeweiligen Nachrichtenquelle und dem ATM-Netz auszutauschenden Informationen bzw. auf Alternativen bezüglich des Ortes der Überwachung der für die einzelnen Datenraten geltenden Verkehrsparameter. Nach den Ausgestaltungen gemäß der Patentansprüche 8 und 9 ist schließlich vorgesehen, daß als Nachrichtensignale Videosignale übertragen werden. Dies bringt den Vorteil mit sich, daß einerseits eine ausreichend konstante subjektive Bildqualität bei der Übertragung von Videosignalen im statistischen Multiplex erreicht werden kann und andererseits die Übertragungs-Steuerung der Videosignale durch einen der jeweiligen Nachrichtenquelle zugehörigen Coder vorgenommen wird, so daß in der Nachrichtenquelle zunächst ohne zusätzlichen Steuerungsaufwand Videosignale in herkömmlicher Weise erzeugt werden können.

Eine Schaltungsanordnung durch Durchführung des Verfahrens gemäß Patentanspruch 3 ergibt sich aus dem Patentanspruch 10. Der Vorteil dieser Schaltungsanordnung besteht dabei in dem relativ geringen schaltungstechnischen Aufwand, mit dem die individuellen Verkehrsparameter in dem ATM-Netz überwacht werden können.

Im folgenden wird nun die vorliegende Erfindung anhand von Zeichnungen beispielsweise näher erläutert.
FIG 1 zeigt in einem Blockschaltbild eine ATM-Kommunikationseinrichtung, an welche eine Mehrzahl von Nachrichtenquellen angeschlossen ist,
FIG 2 zeigt den möglichen Aufbau einer in FIG 1 lediglich schematisch dargestellten Auswerteeinrichtung und
FIG 3 zeigt den möglichen Aufbau einer der in FIG 2 schematisch dargestellten Überwachungseinrichtungen.

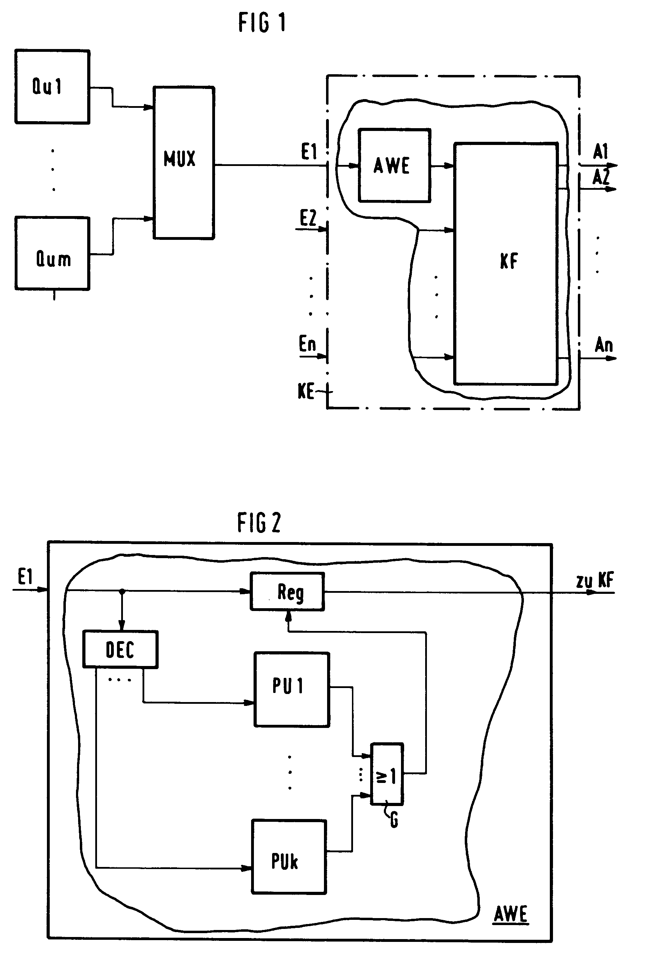

In FIG 1 ist ausschnittweise eine ATM-Kommunikationseinrichtung KE eines ATM ("Asynchronous Transfer Mode")-Netzes dargestellt, welche beispielsweise aus einer Vermittlungseinrichtung gebildet sein möge und über eine Mehrzahl von Eingängen E1 bis En und Ausgängen A1 bis An verfügt. Diese sind über ein Koppelfeld KF in bekannter Weise wahlfrei miteinander verbindbar. An wenigstens einem dieser Eingänge (E1) ist eine Übertragungsleitung angeschlossen, über welche im statistischen Multiplexbetrieb von einer Mehrzahl von Nachrichtenqellen QU1 bis QUm im Zuge von virtuellen Verbindungen abgegebene Nachrichtenzellen übertragen werden. Die Nachrichtenquellen, bei denen es sich beispielsweise um Videoquellen handeln möge, sind dafür an eine Multiplexeinrichtung MUX angeschlossen. Die Nachrichtenzellen sind dabei jeweils in bekannter Weise aus einem Zellenkopf ("Header") und einem daran sich anschließenden Informationsteil gebildet, in welchem von der jeweiligen Nachrichtenquelle abgegebene Nachrichtensignale, hier Videosignale, enthalten sind. Der Zellenkopf enthält dagegen sämtliche Informationen, die für eine Übertragung der jeweiligen Nachrichtenzelle im Zuge einer virtuellen Verbindung innerhalb des ATM-Netzes erforderlich sind. So ist in einem solchen Zellenkopf neben anderen Informationen beispielsweise eine virtuelle Kanalnummer VCI enthalten, durch welche die jeweilige virtuelle Verbindung bezeichnet ist.

Wie aus FIG 1 weiterhin hervorgeht, ist der genannten Übertragungsleitung eine Auswerteeinrichtung AWE der ATM-Kommunikationseinrichtung KE zugeordnet, welche, wie im folgenden erläutert wird, für eine Überwachung der verbindungsindividuellen Nachrichtenzellenströme dient.

Für die Übertragung von Nachrichtensignalen (Videosignalen) im Zuge der genannten virtuellen Verbindungen ist vorgesehen, daß für jede Verbindung lediglich eine endliche Anzahl von unterschiedlichen Datenraten Di mit i = 1,..., p festgelegt ist. Diese werden jeweils über einen Zeitraum r · T konstant gehalten. T stellt dabei ein festgelegtes Zeitintervall, r = 1,2,...,rₘₐₓ eine von der jeweiligen Nachrichtenquelle ausgewählte Zufallsfolge dar. Damit kann der von einer Nachrichtenquelle, hier Videoquelle, abgegebene Nachrichtensignalstrom durch einen Semi-Markoff-Prozess beschrieben werden.

Im Zuge eines Verbindungsaufbaues wird anhand von statistischen Verkehrsparametern, durch die die statistische Verteilung der Datenraten und damit der von der jeweiligen Videoquelle abgegebene Nachrichtensignalstrom definiert ist, von dem ATM-Netz her eine entsprechende Übertragungskapazität auf der genannten Übertragungsleitung reserviert. Bei dem vorliegenden Ausführungsbeispiel werden als statistische Verkehrsparameter die Sendedauern, für die mit den einzelnen Datenraten gesendet wird, und die Wiederholzeiten für die einzelnen Datenraten herangezogen. Es können jedoch auch anderweitige statistische Verkehrsparameter zugrundegelegt werden, durch die die statistische Verteilung der Datenraten eindeutig definiert ist. Bei dem angenommenen Beispiel kann dabei so vorgegangen sein, daß im Zuge eines Verbindungsaufbaues von der jeweiligen Videoquelle Angaben bezüglich der Erwartungswerte für die Sendedauern und Wiederholzeiten der einzelnen Datenraten über die genannte Übertragungsleitung zu dem ATM-Netz hin übertragen werden, d.h. in Signalisierungszellen. Nach Maßgabe dieser Angaben wird dann von dem ATM-Netz eine entsprechende Übertragungskapazität reserviert. Abweichend davon kann jedoch von der Videoquelle auch lediglich eine Information bezüglich der Art der Nachrichtensignale, hier Videosignale, übertragen werden, woraufhin das ATM-Netz von sich aus eine entsprechende Übertragungskapazitäts-Reservierung vornimmt.

Unabhängig von der Art der Signalisierung werden nach einem Verbindungsaufbau von der Videoquelle her Videosignale mit den festgelegten Datenraten in Form der genannten Nachrichtenzellen über die in FIG 1 dargestellte Übertragungsleitung übertragen. Dabei kann so vorgegangen werden, daß die jeweilige Videoquelle zunächst die Videosignale in herkömmlicher Weise erzeugt und die Übertragung in der vorstehend erläuterten Weise durch einen der Videoquelle zugehörigen Coder gesteuert wird.

Durch die vorstehend erläuterte Art der Übertragung und eine geeignete Festlegung der Datenraten kann erreicht werden, daß durch die zuvor erwähnten Videosignale eine konstante subjektive Bildqualität in einem Videompfänger erreicht wird. Außerdem kann durch die Festlegung der Anzahl von Datenraten p ein hoher statistischer Multiplexgewinn erzielt werden.

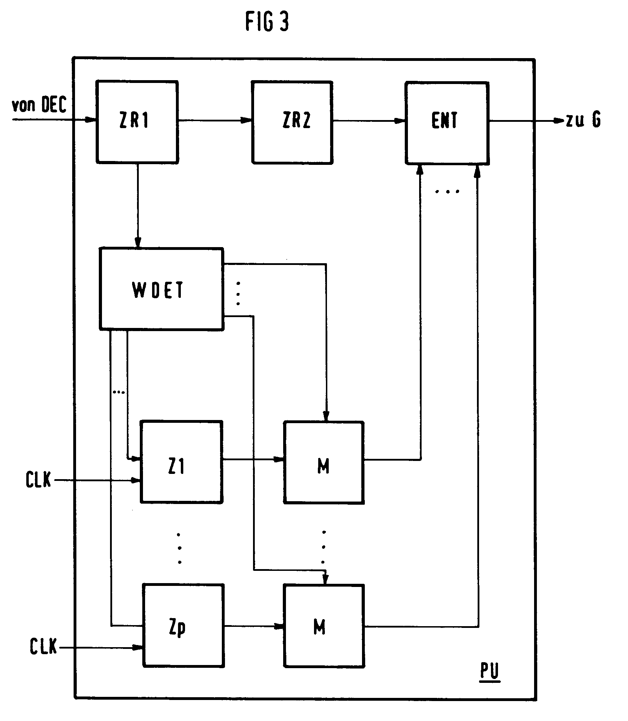

In dem ATM-Netz erfolgt für jede der über die in FIG 1 dargestellte Übertragungsleitung verlaufende virtuelle Verbindung eine verbindungsindividuelle Überwachung auf die Einhaltung der statistischen Verkehrsparameter für die einzelnen Datenraten. Hierfür ist die bereits erwähnte, in FIG 1 dargestellte Auswerteeinrichtung AWE vorgesehen. Deren Wirkungsweise wird nachfolgend anhand der FIG 2 und 3 erläutert.

In FIG 2 ist ein möglicher Aufbau der Auswerteeinrichtung AWE ausschnittweise dargestellt. Danach ist an den mit der Übertragungsleitung verbundenen Eingang E1 einerseits ein Register Reg angeschlossen, in welchem eine gerade aufgenommene Nachrichtenzelle vor einer Weiterleitung an das Koppelfeld KF zwischengespeichert wird. Darüber hinaus ist an den Eingang E1 eine Decodiereinrichtung DEC angeschlossen. Diese steht über Steuerausgänge mit einer Mehrzahl von Überwachungseinrichtungen PU1 bis PUk in Verbindung. Die Anzahl k entspricht dabei der möglichen Anzahl der über die Übertragungsleitung verlaufenden virtuellen Verbindungen. Diese Überwachungseinrichtungen dienen für die verbindungsindividuelle Überwachung der für die einzelnen festgelegten Datenraten in Frage kommenden statistischen Verkehrsparameter, bei dem Ausführungsbeispiel also der Sendedauern und Wiederholzeiten für die einzelnen Datenraten. Ausgangsseitig sind diese Überwachungseinrichtungen jeweils an einen Eingang eines ODER-Gliedes G angeschlossen, welches ausgangsseitig mit einem Steuereingang des zuvor erwähnten Registers Reg verbunden ist .

Bei Eintreffen einer Nachrichtenzelle wird diese zunächst in dem Register Reg zwischengespeichert. Darüber hinaus wertet die Decodiereinrichtung DEC den zugehörigen Zellenkopf, insbesondere die zuvor genannte virtuelle Kanalnummer VCI aus und aktiviert nach Maßgabe dieser virtuellen Verbindung die in Frage kommende Überwachungseinrichtung (PU1,..., PUk). Dabei überprüft die betreffende Überwachungseinrichtung, ob einerseits die Konstanz der gerade vorliegenden Datenrate und andererseits der Mittelwert bzw. eine Funktion des Mittelwertes der Sendedauern und Wiederholzeiten für diese Datenrate innerhalb einer festgelegten Toleranzgrenze liegt. Ist dies der Fall, so wird die in dem Register Reg gerade zwischengespeicherte Nachrichtenzelle an das Koppelfeld KF weitergeleitet. Anderenfalls wird von der gerade aktivierten Überwachungseinrichtung her ein Steuersignal an das ODER-Glied G abgegeben. Dieses Steuersignal bewirkt dabei beispielsweise, daß die in dem Register Reg zwischengespeicherte Nachrichtenzelle vernichtet wird.

Die Überwachungseinrichtungen PU1 bis PUk weisen jeweils einen in FIG 3 dargestellten möglichen Aufbau auf. Mit der Decodiereinrichtung DEC ist eine Anordnung ZR1 zum Feststellen der momentanen Zellenrate verbunden. Diese Anordnung ermittelt anhand der für die jeweilige virtuelle Verbindung nacheinander auftretenden Nachrichtenzellen die pro festgelegtem Zeitintervall auftretende Anzahl von Nachrichtenzellen, d.h. es wird die momentane Datenrate ermittelt. Ausgangsseitig steht die Anordnung ZR1 einerseits mit einer Anordnung ZR2 für die Messung der Konstanz der gerade auftretenden Datenrate und andererseits mit einem Wechseldetektor WDET in Verbindung. Dieser Wechseldetektor ist mit Steuerausgängen an eine Mehrzahl von Bewertungseinrichtungen angeschlossen, die jeweils einer der festgelegten Datenraten p zugeordnet sind. Jede dieser Bewertungseinrichtungen weist dabei einen von dem Wechseldetektor WDET rücksetzbaren Zähler auf, der mit den oben erwähnten Zeitintervallen T entsprechenden Zählimpulsen beaufschlagt ist. Die einzelnen Zähler sind entsprechend ihrer Zuordnung mit Z1 bis Zp bezeichnet. Jedem dieser Zähler ist eine Monitoreinrichtung M nachgeschaltet. Ausgangsseitig stehen die einzelnen Monitoreinrichtungen jeweils mit einem Eingang eines Entscheiders ENT in Verbindung, an dem auch der Ausgang der Anordnung ZR2 angeschlossen ist. Dieser Entscheider ist über einen Ausgang mit dem in FIG 2 dargestellten ODER-Glied G verbunden.

Nach Maßgabe der von der Anordnung ZR1 bereitgestellten Datenraten-Information wird durch die Anordnung ZR2 in einem festgelegten Zeitraster überprüft, ob die Konstanz der gerade auftretenden Datenrate innerhalb festgelegter Toleranzgrenzen liegt. Darüber hinaus steuert der Wechseldetektor WDET nach Maßgabe der Datenraten-Information die Zähler Z1 bis Zp derart, daß durch diese jeweils nach Maßgabe der sich durch die genannten Taktimpulse fortlaufend verändernden momentanen Zählerstände entweder die Sendedauer der gerade auftretenden Datenrate oder die Wiederholzeit einer der übrigen, gerade nicht auftretenden Datenraten ermittelt wird. Der jeweilige momentane Zählerstand wird dabei jeweils der nachgeschalteten Monitoreinrichtung M zugeführt, die für den Fall, daß durch den zugehörigen Zähler die Sendedauer einer gerade auftretenden Datenrate überwacht wird, anhand der nacheinander zugeführten momentanen Zählerstände überprüft, ob der Mittelwert bzw. eine Funktion des Mittelwertes der Sendedauern der gerade auftretenden Datenrate innerhalb festgelegter Toleranzgrenzen liegt. Anderenfalls, d.h. daß durch den zugehörigen Zähler gerade die Wiederholzeit einer gerade nicht auftretenden Datenrate ermittelt wird, überprüft dagegen die Monitoreinrichtung M, ob der Mittelwert bzw. eine Funktion des Mittelwertes der jeweiligen Wiederholzeiten innerhalb festgelegter Toleranzgrenzen liegt. Die Auswertung durch die Bewertungseinrichtung erfolgt dabei mit einem gegenüber dem für die Anordnung ZR1 festgelegten Zeitraster gröberen Zeitraster.

Die für die Anordnung ZR1 und die Monitoreinrichtungen M jeweils zu berücksichtigenden Toleranzgrenzen werden nach Maßgabe der oben erwähnten, im Zuge des Aufbaues der jeweiligen virtuellen Verbindung zwischen der in Frage kommenden Videoquelle und dem ATM-Netz ausgetauschten Signalisierungsinformationen festgelegt. Die Monitoreinrichtungen können im übrigen aus bekannten Einrichtungen zur Ermittlung des Mittelwertes bzw. einer Funktion eines solchen Mittelwertes gebildet sein. Als Beispiel seien hier sogennante "Leaky-Bucket"-Zähler genannt.

Ein Überschreiten einer der genannten Toleranzgrenzen wird im übrigen von der Anordnung ZR2 bzw. von den Monitoreinrichtungen M dem Entscheider ENT durch ein Meldesignal angezeigt, welches die Abgabe eines oben genannten Steuersignals an das ODER-Glied G bewirkt.

Abschließend sei noch darauf hingewiesen, daß zwar vorstehend die vorliegende Erfindung anhand der Übertragung von Videosignalen beschrieben worden ist . Die Erfindung ist jedoch nicht darauf beschränkt, sondern sie ist immer dann anwendbar, wenn Nachrichtensignale von einer Mehrzahl von Nachrichtenquellen über eine gemeinsame Übertragungsleitung nach einem statistischen Multiplexbeterieb zu übertragen sind.

## Patentansprüche

1. Verfahren zum Übertragen von Nachrichtensignalen in Form von Nachrichtenzellen, die im Zuge von virtuellen Verbindungen von einer Mehrzahl von Nachrichtenquellen (QU1,..., QUm) mit variabler Datenrate abgegeben und über eine gemeinsame Übertragungsleitung (z.B. E1) eines nach einem asynchronen Übertragungsprinzip arbeitenden ATM-Netzes mit wenigstens einer ATM-Kommunikationseinrichtung (KE), übertragen werden,
**dadurch gekennzeichnet**,
daß für die jeweilige virtuelle Verbindung einer Nachrichtenquelle lediglich eine endliche Anzahl von unterschiedlichen Datenraten festgelegt wird, welche jeweils durch bestimmte statistische Verkehrsparameter gekennzeichnet sind,
und daß durch das ATM-Netz im Zuge des Aufbaus der jeweiligen virtuellen Verbindung nach Maßgabe dieser statistischen Verkehrsparameter eine entsprechende Übertragungskapazität auf der Übertragungsleitung (E1) reserviert wird.

2. Verfahren nach Anspruch 1,
**dadurch gekennzeichnet**,
daß als statistische Verkehrsparameter für die jeweilige Datenrate deren von ihrem Wert her schwankende Sendedauer und Wiederholzeit benutzt werden.

3. Verfahren nach Anspruch 2,
**dadurch gekennzeichnet**,
daß während der Dauer der jeweiligen virtuellen Verbindung für jede der Datenraten sowohl die Konstanz innerhalb der jeweiligen Sendedauer als auch der Mittelwert bzw. eine Funktion des Mittelwertes der Sendedauer und der Wiederholzeit überwacht werden.

4. Verfahren nach einem der Ansprüche 1 bis 3,
**dadurch gekennzeichnet**,
daß von der jeweiligen Nachrichtenquelle (QU1,..., QUm) für die jeweilige virtuelle Verbindung die Datenraten sowie das statistische Verhalten der zugehörigen statistischen Verkehrsparameter selbst festgelegt und im Zuge des Aufbaues der jeweiligen virtuellen Verbindung dem ATM-Netz mitgeteilt werden.

5. Verfahren nach einem der Ansprüche 1 bis 3,
**dadurch gekennzeichnet**,
daß dem ATM-Netz von der jeweiligen Nachrichtenquelle (QU1,..., QUm) her im Zuge des Aufbaues der jeweiligen virtuellen Verbindung lediglich die Art der zu übertragenden Nachrichtensignale mitgeteilt wird und daß durch das ATM-Netz der Art der Nachrichtensignale entsprechende Datenraten und das statistische Verhalten der zugehörigen statistischen Verkehrsparameter festgelegt werden.

6. Verfahren nach einem der Ansprüche 1 bis 5,
**dadurch gekennzeichnet**,
daß die Überwachung der statistischen Verkehrsparameter für die jeweilige Datenrate in dem ATM-Netz und/oder in der jeweiligen Nachrichtenquelle (QU1,...,QUm) erfolgt.

7. Verfahren nach Anspruch 3,
**dadurch gekennzeichnet**,
daß die Konstanz der jeweiligen Sendedauer in einem festgelegten ersten Zeitraster, der Mittelwert bzw. die Funktion des Mittelwertes der Sendedauer und Wiederholzeit dagegen mit einem festgelegten zweiten, gegenüber dem ersten Zeitraster gröberen Zeitraster überwacht wird.

8. Verfahren nach einem der Ansprüche 1 bis 7,
**dadurch gekennzeichnet**,
daß als Nachrichtensignale Videosignale in digital codierter Form übertragen werden.

9. Verfahren nach Anspruch 8,
**dadurch gekennzeichnet**,
daß die Übertragung der Videosignale mit den unterschiedlichen Datenraten durch einen der jeweiligen Nachrichtenquelle zugehörigen Coder gesteuert wird.

10. Schaltungsanordnung zur Durchführung des Verfahrens nach Anspruch 3 in einem ATM-Netz mit wenigstens einer ATM-Kommunikationseinrichtung (KE), an welches wenigstens eine Übertragungsleitung (z.B.E1) angeschlossen ist , über die durch eine Mehrzahl von Nachrichtenquellen (QU1,..., QUm) im Zuge von virtuellen Verbindungen mit variabler Datenrate abgegebene Nachrichtensignale in Form von Nachrichtenzellen nach einem asynchronen Übertragungsprinzip übertragbar sind,
**dadurch gekennzeichnet**,
daß der jeweiligen Übertragungsleitung (E1) eine Auswerteeinrichtung (AWE) zugeordnet ist, welche eine der Anzahl der über die Übertragungsleitung verlaufenden virtuellen Verbindungen entsprechende Anzahl von Überwachungseinrichtungen (PU1,..., PUk) aufweist, die nach Maßgabe von in den Nachrichtenzellen jeweils enthaltenen, die jeweilige virtuelle Verbindung bezeichnenden Angaben individuell ansteuerbar sind,
daß die jeweilige Überwachungseinrichtung (PU1,..., PUk) eine erste Einrichtung (ZR1, ZR2), welche nach Maßgabe der Anzahl der in festgelegten aufeinanderfolgenden Zeitintervallen jeweils auftretenden Nachrichtenzellen der jeweiligen virtuellen Verbindung die Konstanz einer gerade auftretenden Datenrate überprüft, sowie eine zweite Einrichtung (ZR1; WDET; Z1, M;...; Z1, M) aufweist, welche nach Maßgabe der Wechsel zwischen den für die jeweilige virtuelle Verbindung festgelegten Datenraten individuell für jede der Datenraten den Mittelwert der Sendedauer und der Wiederholzeit ermittelt,
und daß die erste und die zweite Einrichtung jeweils dann ein Steuersignal bereitstellen, wenn die Konstanz bzw. der Mittelwert bzw. eine Funktion des Mittelwertes der Sendedauer oder der Wiederholzeit für wenigstens eine der Datenraten außerhalb eines festgelegten Toleranzbereiches liegt.
